# EUROPEAN PATENT SPECIFICATION

(11) **EP 4 197 766 B1**
(45) Date of publication and mention of the grant of the patent: **14.10.2026**
(21) Application number: 21306818.2
(22) Date of filing: 16.12.2021
(51) Int. Cl.: B29D 11/00, B29C 51/00, B29C 59/00

(54) **METHOD OF FORMING AN OPTICAL ELEMENT AND THERMOFROMING APPRATUS THEREOF**
VERFAHREN ZUR HERSTELLUNG EINES OPTISCHEN ELEMENTS UND VORRICHTUNG ZUM THERMOFORMEN
PROCÉDÉ DE FABRICATION D'UN ÉLÉMENT OPTIQUE ET APPAREIL DE THERMOFORMAGE ASSOCIÉ

(43) Date of publication of application: 21.06.2023
(73) Proprietor: Essilor International, 94220 Charenton-Le-Pont (FR)
(72) Inventor: DRAMMEH, Ahmed, Arlington, MA 02474 (US); TOKARSKI, Zbigniew, Woodstock, MA 06281 (US); JALLOULI, Aref, Shrewsbury, MA 01545 (US)
(74) Representative: Jacobacci & Partners France

(56) References cited:
- US-A1- 2005 249 919
- US-A1- 2021 048 689
- US-A1- 2021 354 409
- US-A1- 2021 356 763

## Description

### FIELD

The present disclosure relates to a method for fabricating microstructured films or microstructured lenses by a micro-forming or micro-embossing.

### BACKGROUND

The background description provided herein is for the purpose of generally presenting the context of the disclosure. Work of the presently named inventors, to the extent the work is described in this background section, as well as aspects of the description that may not otherwise qualify as prior art at the time of filing, are neither expressly nor impliedly admitted as prior art against the present disclosure.

Injection molding of lenses can use glass inserts having microlenses on their surface that are difficult to produce on typical glass materials such as borosilicate. That is, forming microstructures on a glass surface can be expensive, difficult to produce, can lead to glass breakage during microstructure engraving, and are easily and often broken during handling, cleaning, and in the production of lenses. Moreover, glass inserts break easily during injection molding, which leads to significant equipment down time and thus reduces yields and productivity.

Diamond turning of microscale structures into nickel-phosphorous (NiP) coated stainless steel mold inserts can be used to remedy some challenges of glass inserts. However, NiP coated stainless steel mold inserts can also be expensive to produce, customized for a single base curve lens, replaced yearly or when damaged, and entail long lead times for fabrication. In addition, lenses or wafers with microlenses on the surface that are made from diamond turned NiP coated stainless steel mold inserts can have the risk of cosmetics issues such as tooling marks, swirls, channels, melt weld-lines, center distortion, and cosmetic or optical deformations. It is known from document US2005/249919A1, a process for forming an optical element. It is also known from document US2021/356763A1, a method for manufacturing an optical article. It is also known from document US2021/354409A1, a method of forming an optical article.

Aspects of the disclosure may address some of the above-described shortcomings in the art, particularly with the solutions set forth in the claims.

### SUMMARY

The present invention relates to a method as disclosed in claim 1. Advantageous aspects of the method according to the present disclosure are disclosed in claims 2 to 11. The present invention additionally relates to a thermoforming apparatus as disclosed in claim 12. Advantageous aspects of the thermoforming apparatus according to the present disclosure are disclosed in claim 13.

For additional details and/or possible perspectives of the embodiments, the reader is directed to the Detailed Description section and corresponding figures of the present disclosure as further discussed below.

### BRIEF DESCRIPTION OF THE DRAWINGS

Various embodiments of this disclosure that are proposed as examples will be described in detail with reference to the following figures, wherein:
FIG. 1A is a schematic of a flat wafer, useful within the scope of the present disclosure.
FIG. 1B is a schematic of the thermoformed wafer, useful within the scope of the present disclosure.
FIG. 1C is a schematic of a concave mold insert, useful within the scope of the present disclosure.
FIG. 2 is a schematic of a thermoforming apparatus, useful within the scope of the present disclosure.
FIG. 3A is a perspective view schematic of the thermoforming apparatus including an example of embossed microstructures, useful within the scope of the present disclosure.
FIG. 3B is an exemplary cross-sectional schematic of the different types of the microstructures, useful within the scope of the present disclosure.
FIG. 4 is a perspective view schematic of the thermoformed wafer including the microstructures, useful within the scope of the present disclosure.
FIG. 5 a schematic and corresponding optical image of a curved thermoformed wafer, useful within the scope of the present disclosure.
FIG. 6 is a perspective view schematic of a formed lens with microstructures, useful within the scope of the present disclosure.
FIG. 7A is a schematic and corresponding optical image of a curved thermoformed wafer, useful within the scope of the present disclosure.
FIG. 7B is the optical image of the curved thermoformed wafer including an overlaid legend, useful within the scope of the present disclosure.
FIG. 7C shows a 2D optical microscopy image and a 3D surface profile image at 200X power of the embossed feature at the 12 o'clock position, useful within the scope of the present disclosure.
FIG. 7D shows a surface microscopy profile at 200X power of the embossed feature at the 12 o'clock position, useful within the scope of the present disclosure.
FIG. 7E shows a 2D optical microscopy image and a 3D surface profile image at 200X power of the embossed feature at the 1 o'clock position, useful within the scope of the present disclosure.
FIG. 7F shows a surface microscopy profile at 200X power of the embossed feature at the 1 o'clock position, useful within the scope of the present disclosure.
FIG. 7G shows a 2D optical microscopy image and a 3D surface profile image at 200X power of the embossed feature at the 3 o'clock position, useful within the scope of the present disclosure.
FIG. 7H shows a surface microscopy profile at 200X power of the embossed feature at the 3 o'clock position, useful within the scope of the present disclosure.
FIG. 7I shows a 2D optical microscopy image and a 3D surface profile image at 200X power of the embossed feature at the 4 o'clock position, useful within the scope of the present disclosure.
FIG. 7J shows a surface microscopy profile at 200X power of the embossed feature at the 4 o'clock position, useful within the scope of the present disclosure.
FIG. 7K shows a 2D optical microscopy image and a 3D surface profile image at 200X power of the embossed feature at the 6 o'clock position, useful within the scope of the present disclosure.
FIG. 7L shows a surface microscopy profile at 200X power of the embossed feature at the 6 o'clock position, useful within the scope of the present disclosure.
FIG. 7M shows a 2D optical microscopy image and a 3D surface profile image at 200X power of the embossed feature at the center position, useful within the scope of the present disclosure.
FIG. 7N shows a surface microscopy profile at 200X power of the embossed feature at the center position, useful within the scope of the present disclosure.
FIG. 8 is an exemplary flow chart for a method of forming an optical element, useful within the scope of the present disclosure.

### DETAILED DESCRIPTION

The following disclosure provides many different variations, or examples, for implementing different features of the provided subject matter. Specific examples of components and arrangements are described below to simplify the present disclosure. These are, of course, merely examples and are not intended to be limiting nor inoperable together in any permutation. Unless indicated otherwise, the features and embodiments described herein are operable together in any permutation. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed. Further, spatially relative terms, such as "top," "bottom," "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. Inventive apparatuses may be otherwise oriented (rotated 90 degrees or at other orientations) and the spatially relative descriptors used herein may likewise be interpreted accordingly.

The order of discussion of the different steps as described herein has been presented for clarity sake. In general, these steps can be performed in any suitable order. Additionally, although each of the different features, techniques, configurations, etc. herein may be discussed in different places of this disclosure, it is intended that each of the concepts can be executed independently of each other or in combination with each other. Accordingly, the present disclosure can be embodied and viewed in many different ways.

Although injection molding technology is a common method for large scale manufacturing of micropatterning technologies, microforming in many ways has the ability to replicate very fine and intricate geometries while also changing the geometry of a substrate at the same time. This is particularly useful in ophthalmic applications where various degrees of curvatures can be produced to address issues pertaining to vision correction. To that end, a process leveraging a thermoforming apparatus having a pattern formed therein can be used.

Described herein, a method to fabricate microstructured films or microstructured lenses uses a microforming or microembossing technique. A heated forming insert can be used to produce raised or recessed microstructures on film, semi-finished, or finished single vision polycarbonate lenses for myopia control and myopia prevention. The method includes heating the surface that is in contact with the forming insert to above a deformation temperature (i.e., a glass transition temperature, T_{g}) of the material (for example, 10°C to 20°C above the T_{g}) and either applying pressure, vacuum, or mechanical force to the film or lens. That is, the thermoforming (i.e., the microforming or the microembossing) technique can be plug-assisted forming, hydro-assisted forming, pressure-assisted forming, or vacuum-assisted forming. The disclosed method can create a pathway to modify the thermoforming process via the addition of micron-scale cavities or raised/recessed structures onto a thermoforming apparatus to impregnate optical films with microstructures of different size, shapes, and periodicities. Notably, this single-step process can reduce the cost of preparing microlens films. Large scale micro thermoforming processes could open up the possibility of producing inexpensive lenses due to a reduction in processing steps.

Die cutting tools can be used to cut wafers from flat film or laminate sheets into circular or oval disks. These flat laminate wafers are then thermoformed into a spherical dome shape. The diameter of the flat laminate wafers are determined by considering, at least, one or more of: the desired lens diameter (e.g., 70 mm, 76 mm, 80 mm, etc.), the base curve of the thermoformed wafer (e.g., 0.25, 1.75, 3.00, 4.00, 4.50, 5.50, 6.00, 6.50, 7.25, 8.00 Diopters, etc.), and the base curve of the mold insert (e.g., 1.75, 2.25, 3.25, 4.25, 5.50, 6.50, 7.50, 8.50 Diopters, etc.). The base curve of the mold insert can be the same base curve as the convex power surface of the lens.

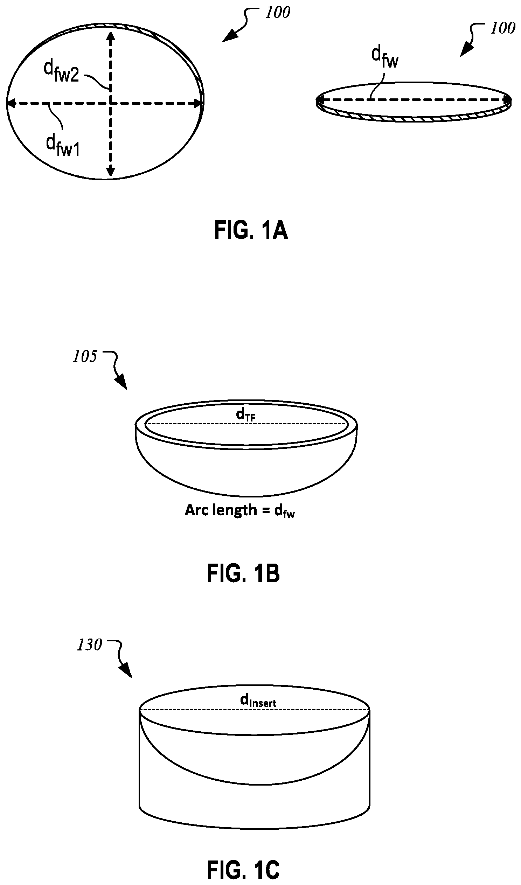

To that end, FIG. 1A is a schematic of a flat wafer 100, useful within the scope of the present disclosure. In a useful scope, the flat wafer 100 can be any optical element or optical material formed into a structure for thermoforming. Materials for the flat wafer 100 or optical element include polycarbonate, cellulose esters (e.g., cellulose triacetate, cellulose acetate proprionate, cellulose acetate butyrate), acrylics, cyclic olefin copolymers, amorphous polyamides, polyethylene-naphthalene, polyethylene terephthalate, polymethyl-pentene, and the like, and optically transparent film/laminate with little to no haze. FIG. 1A shows diameters and base curves of various components involved in cutting, thermoforming, and molding. In a useful scope, the flat wafer 100 can be circular or elliptical. In a useful scope, a diameter, ***d_{fw}*,** of a circular flat wafer is the same length as an arc length of a thermoformed wafer 105 (see FIG. 1B) after thermoforming. In a useful scope, an elliptical flat wafer 100 can include a semimajor axis, ***d_{fw1}**,* and a semiminor axis, ***d_{fw2}**.*

FIG. 1B is a schematic of the thermoformed wafer 105, useful within the scope of the present disclosure. In a useful scope, a cord length, ***d_{TF}**,* of the thermoformed wafer 105 can be approximately the same diameter as a diameter of the lens. It may be appreciated that the flat wafer 100 need not be flat before being thermoformed. For example, a wafer having a low base curvature can be formed via thermoforming, then thermoformed again to produce a wafer having a higher base curvature.

FIG. 1C is a schematic of a concave mold insert 130, useful within the scope of the present disclosure. In a useful scope, the diameter of the lens can be determined by, for example, a diameter, ***d_{Insert}**,* of the concave mold insert 130. Thus, both the chord length (***d_{TF}***) and the concave mold insert 130 diameter (***d_{Insert}***) can be smaller in diameter than the diameter (***d_{fw}***) of the flat wafer 100. The arc length of the concave mold insert 130 can be equal to or greater than the arc length (***d_{fw}***) of the thermoformed laminate wafer 105 due to the differences in the base curves of the flat wafer 100 and the concave mold insert 130.

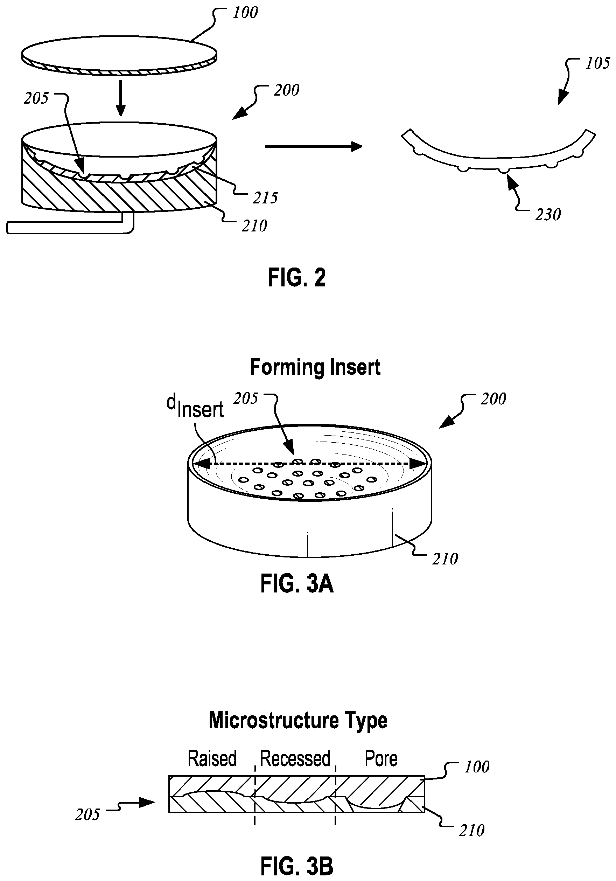

FIG. 2 is a schematic of a thermoforming apparatus 200, useful within the scope of the present disclosure. In a useful scope, the thermoforming apparatus 200 can include a forming insert 210 having a forming surface 215, the forming surface 215 including concave or convex microstructures 205 formed thereon, wherein in one example, the inverted/concave microstructures 205 are microcavities (as shown). In a useful scope, the (convex/concave) microstructures 205 can instead be microprotrusions, microindentations, microperforations, or any combination of the aforementioned microstructural features. The forming surface 215 of the forming insert 210 can have a curvature (as well as the forming insert 210) and the microstructures 205 can be formed along the curvature of the forming surface 215. For example, the forming surface 215 is concave (as shown). For example, the forming surface 215 is convex. The thermoforming apparatus 200, including the forming insert 210, can be heated to a predetermined temperature based on a glass transition temperature of the flat wafer 100.

In a useful scope, the flat wafer 100 can be disposed within the thermoforming apparatus 200 and in contact with the forming surface 215 of the forming insert 210. A force can be applied to the flat wafer 100 to improve contact with the forming surface 215 and thereby adopt the curvature of the forming surface 215. The applied force can be delivered via a press, a hydro-based pressure, a hot pressurized gas, or a vacuum force (such as via microperforations in the features of the microstructures 205). The flat wafer 100 can be heated by the heat applied to the thermoforming apparatus 200 by conductive, convective, or radiative heating elements, wherein the heat increases the malleability of the flat wafer 100. Thus, the general shape of the forming insert 210 can be used to produce the base curve radius and shape of the thermoformed wafer 105. Holding and heating the flat wafer 100 in the thermoforming apparatus 200 can further facilitate transfer of the microstructures 205 pattern to the thermoformed wafer 105. Upon releasing the thermoformed wafer 105, the thermoformed wafer 105 having microstructures 230 (an inversion of the concave/convex microstructures 205) on a surface of the thermoformed wafer 105 is produced.

In a useful scope, thermoformed films and wafers can be laminated using a suitable adhesive and a protective top film, such as a polycarbonate film. Further, the forming insert 210 can be designed at various base curvatures to accommodate different desired lens base curves. The microperforations of the microstructures 205 can be designed in such a way that a vacuum assist system and forming process parameters (ramp/hold time, temperature, pressure, vacuum, etc.) can produce different microlens radii. The microperforations can be holes that are, for example, 100 µm to 1500 µm. The shape of the holes can be for example, circular, triangular, square, rectangular, pentagonal, hexagonal, octagonal, etc. and with the side of the hole having a chamfered edge. The parameters can be optimized for different forming inserts 210, raised microstructures (microprotrusions), and recessed microstructures (microcavities).

Additional features of the disclosed method are described herein in greater detail.

FIG. 3A is a perspective view schematic of the thermoforming apparatus 200 including the microstructures 205, useful within the scope of the present disclosure. In a useful scope, for the microstructures 205 being microperforations (i.e., small through-holes) for forming microlenses on the thermoformed wafer 105, the planar dimensions (x- and y-axis) of the microlenses can be determined by the dimensions of the microperforations and the chamfer angle of the microperforations. The height/depth (sag) (z-axis) of the microlens can be determined by the rheological properties of the thermoformed wafer 105 material, the pressure, the vacuum force, the temperature applied, the heating and cooling rates, hold/soak times, and the mechanical force applied to the flat wafer 100 during thermoforming. The microlens periodicity can be determined by the forming insert 210 design (e.g., ring, contiguous, etc.). Multiple sag heights can be achieved using different process parameters using a single forming insert 210 design.

In a useful scope, for the microstructures 205 being raised or recessed microstructures for forming microlenses on the thermoformed wafer 105, the planar dimensions (x- and y-axis) and the height/depth (z-axis) of the microlenses can be determined by the dimensions of the microstructures 205 on the forming insert 210. Processing parameters include thermomechanical properties of the thermoformed wafer 105 or lens material, for example a thermoplastic or deformable thermoset lens material, the pressure, the vacuum force, the temperature applied, the heating and cooling rates, and the mechanical force applied to the flat wafer 100 during thermoforming. The microlens periodicity can be determined by the forming insert 210 design (e.g., ring, contiguous, etc.).

FIG. 3B is an exemplary cross-sectional schematic of the different types of the microstructures 205, useful within the scope of the present disclosure. In a useful scope, the microstructures 205 can be raised (left) to form microcavities, recessed (center) to form microprotrusions, or pore (left) to form fully or partially perforated microperforations on a surface of the thermoformed wafer or lens (105).

The flat wafer 100 (or film or lens) can be cut to appropriate size to thermoform into a base curve suitable for injection overmolding to form a nearly identical base curved lens, such as a polycarbonate lens. The flat wafer 100 can be disposed in the heated forming insert 210. Notably, the forming insert 210 can be part of a multiple forming insert 210 carousel (LEMA of Italy) or multiple forming insert 210 conveyor that only heats the forming insert. Both types of heating elements facilitate adding heat to the forming insert 210, films (or laminates), or lens.

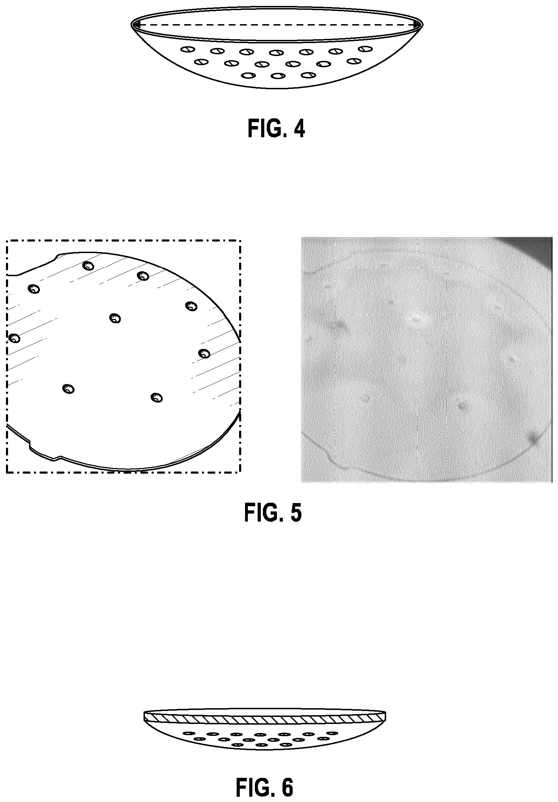

FIG. 4 is a perspective view schematic of the thermoformed wafer 105 including the microstructures 230 (microlenses), useful within the scope of the present disclosure. In a useful scope, the thermoformed wafer 105 can be formed with different base curvatures ranging from, for example, 1.00 Diopter to 8.50 Diopter while retaining the structural integrity and optical performance of the microstructures 230.

FIG. 5 is a schematic and corresponding optical image of a curved thermoformed wafer, useful within the scope of the present disclosure. In a useful scope, the thermoformed wafers are formed to a low base curve wafer and include 8 or more microlenslets around the film periphery and one microlenslet in the center.

FIG. 6 is a perspective view schematic of a formed lens with microstructures, useful within the scope of the present disclosure. Notably, the forming insert 210 base curvature can match the base curve of the formed lens to facilitate lens fabrication, such as a curvature in the range of 1.00 Diopter to 8.50 Diopter and can include several, for example 100 microlenslets, around the film center.

As previously described, the plurality of microstructures 205 can be used to mold, for example, refractive micro-structures or diffractive micro/nano-structures. The plurality of microstructures 205 can be an inversion of a desired final pattern be formed on the resulting lens after molding. The plurality of microstructures 205 can include microlenses or microlenslets or any other type of structure or elements having physical Z deformation/height or depth between 0.1 µm to 50 µm and width/length between 0.5 µm to 2.0 mm. These structures preferably have periodical or pseudo periodical layout but may also have randomized positions. The preferred layout for microstructures is a grid with constant grid step, honeycomb layout, multiple concentric rings, contiguous e.g., no space in between microstructures. These structures may provide optical wave front modification in intensity, curvature, or light deviation, where the intensity of wave front is configured such that structures may be absorptive and may locally absorb wave front intensity with a range from 0% to 100%, where the curvature is configured such that the structure may locally modify wave front curvature with a range of +/- 20 Diopters, and light deviation is configured such that the structure may locally scatter light (refract / diffract) with angle ranging from +/- 1° to +/-30°. A distance between structures may range from 0 (contiguous) to 3 times the structure in "X" and/or "Y" size (separate microstructures).

In the sense of the disclosure, two optical elements located on a surface of a lens substrate are contiguous if there is a path supported by said surface that links the two optical elements and if along said path one does not reach the basis surface on which the optical elements are located. According to another scope, the optical elements are contiguous over a pupil when the optical lens over said pupil comprises no refraction area having a refractive power based on a prescription for said eye of the wearer or a refraction area having a refractive power based on a prescription for said eye of the wearer consisting in a plurality of respectively independent island-shaped areas. According to another scope, the two optical elements are contiguous if there is a path linking the two optical elements along part of said path one may not measure the refractive power based on a prescription for the eye of the person. According to another scope, optical elements being contiguous can also be defined in a surfacic or surface-oriented manner. A measured surface being between 3 mm² and 10 mm² is considered. The measured surface comprises a density of "W" optical elements per mm². If in said measured surface, at least 95% of the surface, preferably 98%, has an optical power different from the surface onto which the optical elements are located, said optical elements are considered to be contiguous.

Furthermore, microstructures which form a microstructured main surface of an ophthalmic lens substrate may include lenslets. Lenslets may form bumps and/or cavities (i.e., raised or recessed lenslet structures) at the main surface they are arranged onto. The outline of the lenslets may be round or polygonal, for example hexagonal. More particularly, lenslets may be microlenses. A microlens may be spherical, toric, cylindrical, prismatic, or aspherical shapes or any combination to make a multi-element shape. A microlens may have a single focus point, or cylindrical power, or multi-focal power, non-focusing point, or diffractive. Microlenses can be used to prevent progression of myopia or hyperopia. In that case, the base lens substrate comprises a base lens providing an optical power for correcting myopia or hyperopia, and the microlenses may provide respectively an optical power greater than the optical power of the base lens if the wearer has myopia, or an optical power lower than the optical power of the base lens if the wearer has hyperopia. Lenslets may also be Fresnel type microstructures, diffractive structures such as microlenses defining each a Fresnel structure, permanent technical bumps (raised structures), or phase-shifting elements. It can also be a refractive optical element such as microprisms and a light-diffusing optical element such as small protuberances or cavities, or any type of element generating roughness on the substrate. It can also be π-Fresnel lenslets as described in US2021109379, i.e. Fresnel lenslets which phase function has π phase jumps at the nominal wavelength, as opposition to unifocal Fresnel lenses which phase jumps are multiple values of 2π. Such lenslets include structures that have a discontinuous shape. In other words, the shape of such structures may be described by an altitude function, in terms of distance from the base level of the main surface of the optical lens the lenslet belongs to, which exhibits a discontinuity, or which derivative exhibits a discontinuity. In a useful scope, the microstructure can be a branding mark, holographic mark, metasurface, or the like.

Lenslets may have a contour shape being inscribable in a circle having a diameter greater than or equal to 0.5 micrometers (µm) and smaller than or equal to 2.0 millimeters (mm). Lenslets may have a height, measured in a direction perpendicular to the main surface they are arranged onto, that is greater than or equal to 0.1 µm and less than or equal to 50 µm. Lenslets may have periodical or pseudo periodical layout but may also have randomized positions. One layout for lenslets is a grid with constant grid step, honeycomb layout, multiple concentric rings, contiguous e.g. no space in between microstructures. These structures may provide optical wave front modification in intensity, curvature, or light deviation, where the intensity of wave front is configured such that structures may be absorptive and may locally absorb wave front intensity with a range from 0% to 100%, where the curvature is configured such that the structure may locally modify wave front curvature with a range of +/- 10, 20, 500, or 1000 Diopters, and light deviation is configured such that the structure may locally scatter light with angle ranging from +/- 1° to +/- 30°. A distance between structures may range from 0 (contiguous) to 3 times the structure (separate microstructures).

### EXAMPLES

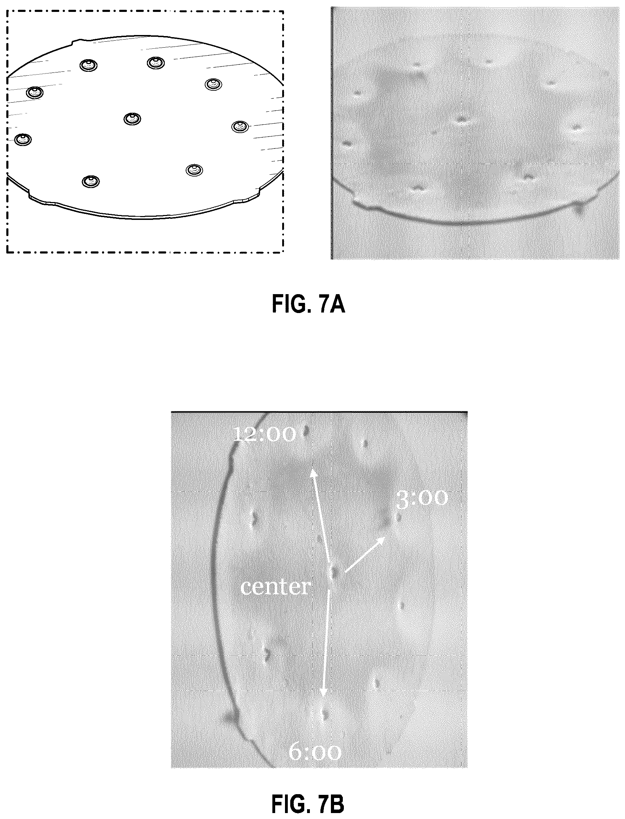

Example 1 - A forming insert has a base curve of 4.50 Diopters and 9 holes capable of pulling vacuum, 8 holes of which are arranged annularly around a central hole. A tri-acetyl cellulose film measuring 240 µm in thickness and 76mm in diameter was heated to 60°C for 8 hours prior to thermoforming. The lens wafer was arranged in the forming insert and a vacuum pressure of -0.6 psi was applied to form the lens wafer to the shape of the forming insert. The forming insert was heated to a forming temperature of 120°C and the lens wafer was held in place for a residence time of 5 minutes. FIG. 7A is a schematic and corresponding optical image of a curved thermoformed wafer, useful within the scope of the present disclosure. FIG. 7B is the optical image of the curved thermoformed wafer including an overlaid legend, useful within the scope of the present disclosure. The general locations of the 8 annular holes around the central hole can be described by positions of hours in a clock. The holes were measured using surface profilometry with a Keyence VK-X200 and imaged with a Nikon microscope. The results of the profilometry are described in Table 1.

**Table 1 - Embossed measurement results.**

| **Position** | **Depth (Microns)** | **Diameter (Microns)** |
|---|---|---|
| 12:00 o'clock | 35.9 | 1427.6 |
| 1:00 o'clock | 35.9 | 1362.0 |
| 3:00 o'clock | 47.4 | 1427.1 |
| 4:00 o'clock | 44.1 | 1425.5 |
| 6:00 o'clock | 45.5 | 1352.4 |
| Center of wafer | 64.1 | 1398.1 |
| **Average** | **45.5** | **1406.1** |
| **STDEV** | **10.33** | **32.51** |

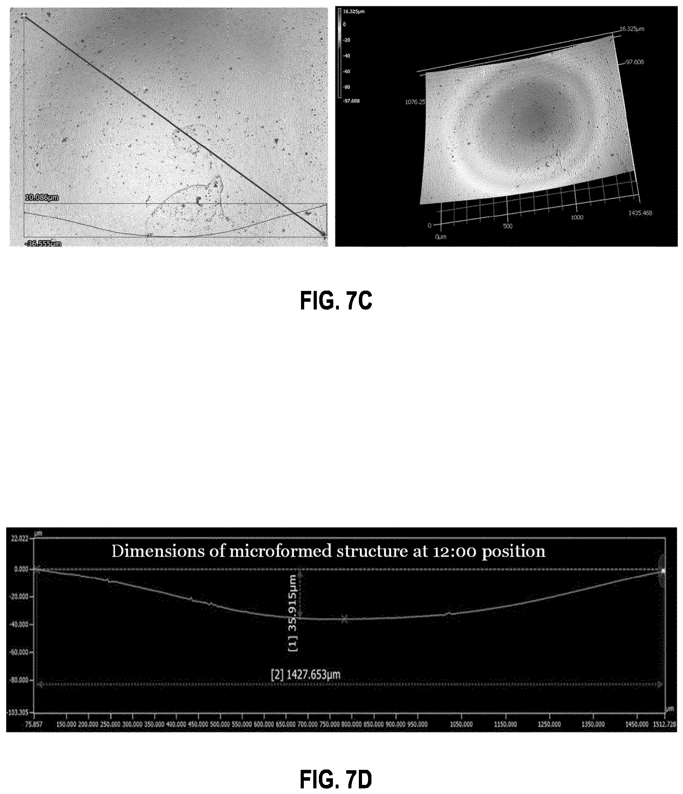

FIG. 7C shows a 2D optical microscopy image and a 3D surface profile image at 200X power of the embossed feature at the 12 o'clock position, useful within the scope of the present disclosure. FIG. 7D shows a surface microscopy profile at 200X power of the embossed feature at the 12 o'clock position, useful within the scope of the present disclosure. The embossed feature at the 12 o'clock position resulted in an embossed depth of 35.9 µm and an embossed width of 1427.7 µm.

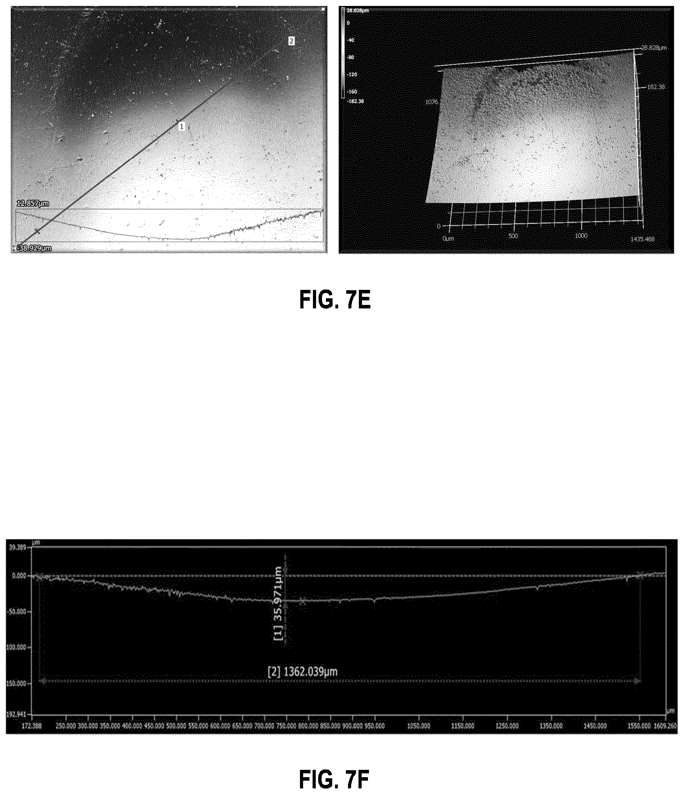

FIG. 7E shows a 2D optical microscopy image and a 3D surface profile image at 200X power of the embossed feature at the 1 o'clock position, useful within the scope of the present disclosure. FIG. 7F shows a surface microscopy profile at 200X power of the embossed feature at the 1 o'clock position, useful within the scope of the present disclosure. The embossed feature at the 1 o'clock position resulted in an embossed depth of 35.97 µm and an embossed width of 1362.0 µm.

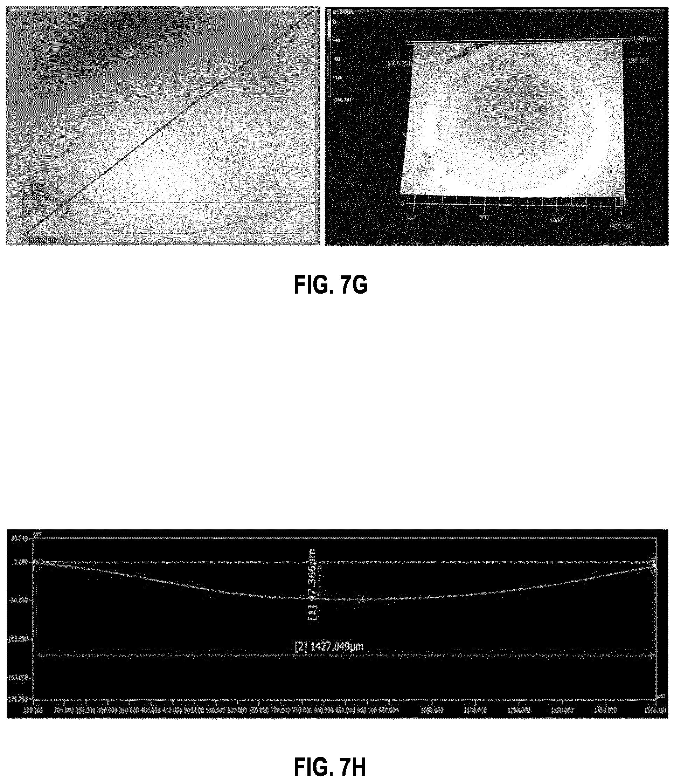

FIG. 7G shows a 2D optical microscopy image and a 3D surface profile image at 200X power of the embossed feature at the 3 o'clock position, useful within the scope of the present disclosure. FIG. 7H shows a surface microscopy profile at 200X power of the embossed feature at the 3 o'clock position, useful within the scope of the present disclosure. The embossed feature at the 3 o'clock position resulted in an embossed depth of 47.37 µm and an embossed width of 1427.0 µm.

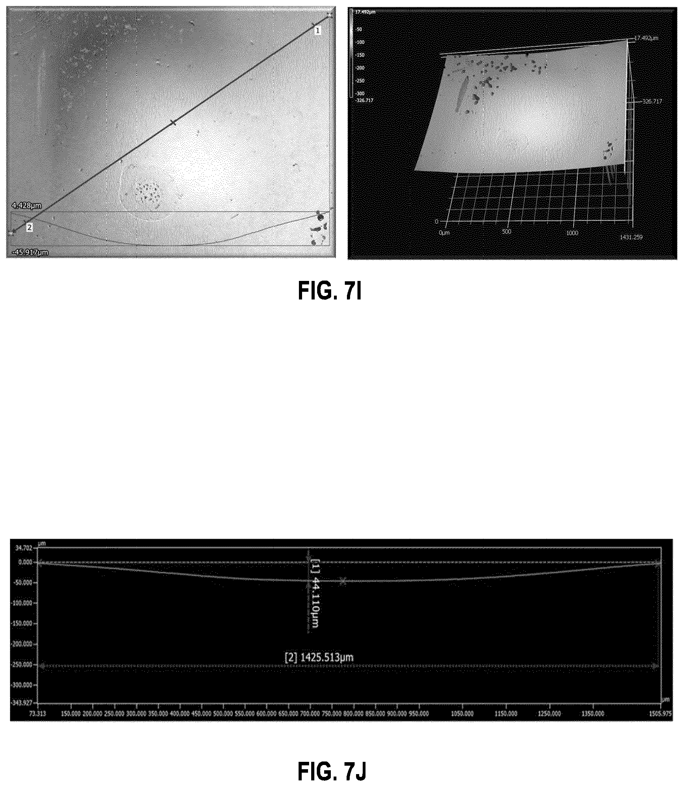

FIG. 7I shows a 2D optical microscopy image and a 3D surface profile image at 200X power of the embossed feature at the 4 o'clock position, useful within the scope of the present disclosure. FIG. 7J shows a surface microscopy profile at 200X power of the embossed feature at the 4 o'clock position, useful within the scope of the present disclosure. The embossed feature at the 4 o'clock position resulted in an embossed depth of 44.1 µm and an embossed width of 1425.50 µm.

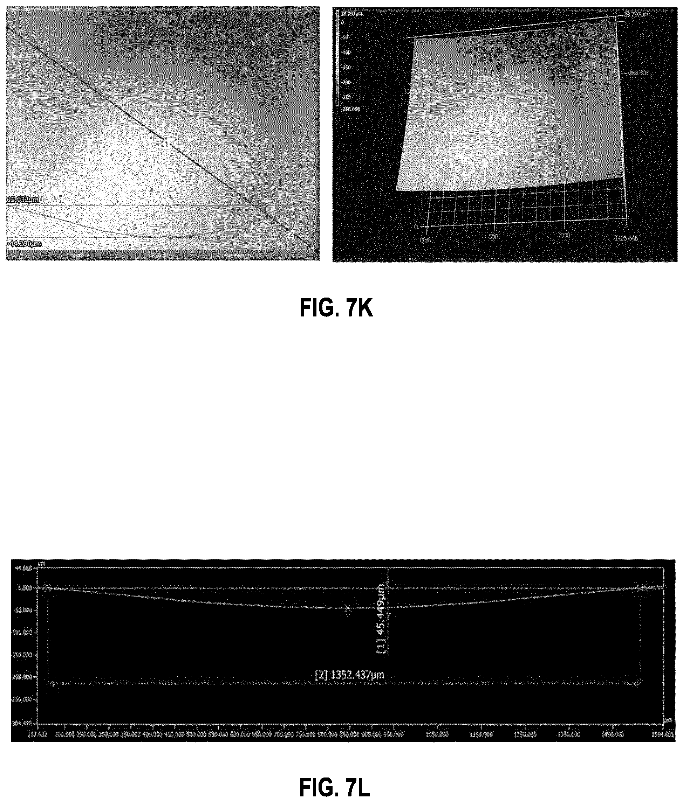

FIG. 7K shows a 2D optical microscopy image and a 3D surface profile image at 200X power of the embossed feature at the 6 o'clock position, useful within the scope of the present disclosure. FIG. 7L shows a surface microscopy profile at 200X power of the embossed feature at the 6 o'clock position, useful within the scope of the present disclosure. The embossed feature at the 6 o'clock position resulted in an embossed depth of 45.45 µm and an embossed width of 1352.44 µm.

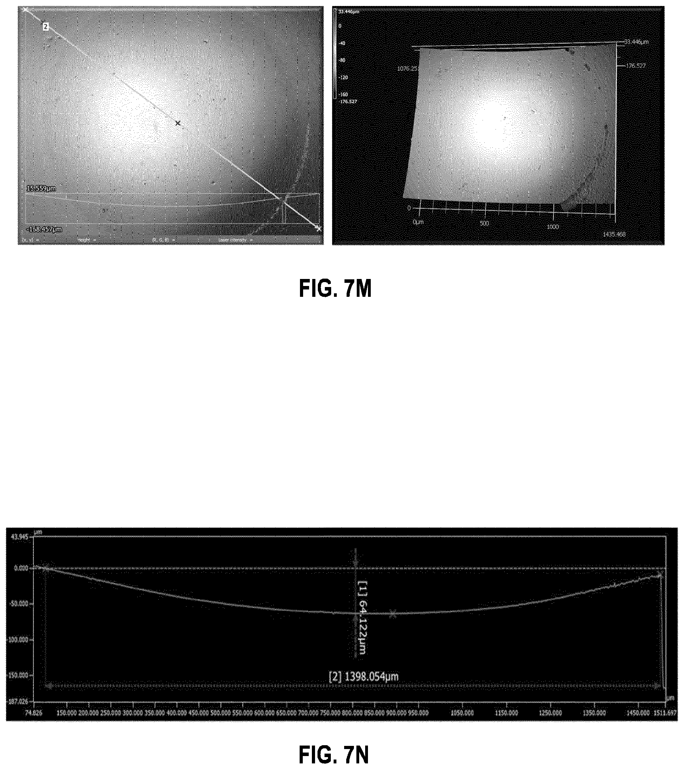

FIG. 7M shows a 2D optical microscopy image and a 3D surface profile image at 200X power of the embossed feature at the center position, useful within the scope of the present disclosure. FIG. 7N shows a surface microscopy profile at 200X power of the embossed feature at the center position, useful within the scope of the present disclosure. The embossed feature at the center position resulted in an embossed depth of 64.12 µm and an embossed width of 1398.05 µm.

As evidenced, the depth values of all 9 microstructures appear to be relatively close to each other, with a small standard deviation. The depth of the center microstructure is approximately 20 µm deeper than the rest of the microstructures. Notably, the results demonstrate the embossing method (i.e., microforming) for films is possible and promising.

In summary, laminates including thermoplastic optical films or casted optical films are cut into oval shaped wafers. The aforementioned wafers are preconditioned at a certain temperature to maintain process uniformity. The preconditioned wafers are thermo-mechanically formed to a desired curvature while in parallel imparting microstructure's preferentially onto one side. The formed microstructured wafers are subsequently incorporated onto a Finished or Semi-Finished lens by direct front side or back side lamination, or by an injection over-molding process. In an alternative example, a finished or semifinished lens can be directly inserted onto an optical surface former and the microstructures can be imparted directly onto them, thus eliminating subsequent processing steps.

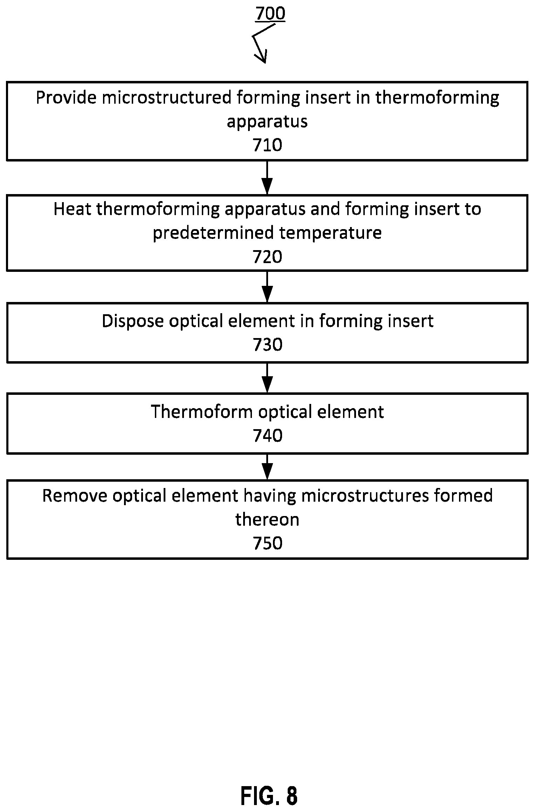

FIG. 8 is an exemplary flow chart for a method 700 of forming an optical element, useful within the scope of the present disclosure. In step 710, the thermoforming apparatus 200 including the forming insert 210 can be provided. In step 720, the forming insert 210 (and the forming surface 215) can be heated to a predetermined temperature, directly by conductive/convective heating or indirectly by IR radiative heating. In step 730, the optical element (the flat wafer 100) can be disposed in the forming insert 210. In step 740, the optical element can be thermoformed via applying a force to the optical element to contact the forming surface 215. In step 750, the thermoformed optical element including the transferred pattern of microstructures 205 to form the microstructures 230 on the surface of the thermoformed optical element can be removed from the thermoforming apparatus 200.

In the preceding description, specific details have been set forth, such as a particular geometry of a processing system and descriptions of various components and processes used therein. It should be understood, however, that techniques herein may be practiced in other embodiments that depart from these specific details, and that such details are for purposes of explanation and not limitation. Embodiments disclosed herein have been described with reference to the accompanying drawings. Similarly, for purposes of explanation, specific numbers, materials, and configurations have been set forth in order to provide a thorough understanding. Nevertheless, embodiments may be practiced without such specific details. Components having substantially the same functional constructions are denoted by like reference characters, and thus any redundant descriptions may be omitted.

Various techniques have been described as multiple discrete operations to assist in understanding the various embodiments. The order of description should not be construed as to imply that these operations are necessarily order dependent. Indeed, these operations need not be performed in the order of presentation. Operations described may be performed in a different order than specifically described unless expressly indicated otherwise. Various additional operations may be performed and/or described operations may be omitted.

Those skilled in the art will also understand that there can be many variations made to the operations of the techniques explained above while still achieving the same objectives of the disclosure. Such variations are intended to be covered by the scope of this disclosure. As such, the foregoing descriptions of embodiments are not intended to be limiting. Rather, any limitations to embodiments are presented in the following claims.

## Claims

1. A method of forming an optical element, comprising:
providing a forming insert in a thermoforming apparatus, the forming insert including a plurality of microstructures formed on a forming surface of the forming insert, said microstructures of the forming insert include microperforations;
heating the forming insert to a first predetermined temperature;
disposing an element comprised of a polymer material in the thermoforming apparatus and in contact with the forming surface of the forming insert; and
thermoforming, via the forming surface of the forming insert, the element, the thermoformed element having microstructures formed on a surface thereof
wherein the method further comprising applying a pressure vacuum, using a vacuum system included in the thermoforming apparatus, to the element via the microperforations.

2. The method of claim 1, wherein the thermoforming further comprises applying mechanical force to the element.

3. The method of claim 1, wherein the microstructures transfer a pattern of microprotrusions to the thermoformed element.

4. The method of claim 1, wherein the microstructures transfer a pattern of microcavities to the thermoformed element.

5. The method of claim 1, wherein a shape of the microperforations is circular, triangular, square, hexagonal, or octagonal.

6. The method of claim 1, wherein a diameter of the microperforations is between 0.5 micrometer to 2000 micrometers.

7. The method of claim 2, wherein applying the mechanical force further comprises applying a force to the element via a hydro-assist.

8. The method of claim 2, wherein applying the mechanical force further comprises applying a force to the element via a plug-assist.

9. The method of claim 1, wherein thermoforming the element further comprises holding the element against the forming surface for a predetermined length of time based on a material rheological relaxation.

10. The method of claim 1, wherein thermoforming the element further comprises direct/indirect heating the element via the forming surface to a second predetermined temperature.

11. The method of claim 1, wherein the element is a film or a lens.

12. A thermoforming apparatus, comprising:
a forming insert including a plurality of microstructures formed on a forming surface thereof, the microstructures of the forming insert include microperforations;
a heating element heating the forming insert to a first predetermined temperature; and
a vacuum system that supports thermoforming of an element to form microstructures on a surface thereof by applying a vacuum suction via the microperforations to an element in contact with the forming surface of the forming insert.

13. The thermoforming apparatus of claim 12, wherein the apparatus comprises a pressure system that supports thermoforming of an element to form microstructures on a surface thereof by applying a pressure, and/or a mechanical force system to form microstructures on a surface thereof by applying a mechanical force to an element in contact with the forming surface of the forming insert .

## Patentansprüche

1. Verfahren zum Bilden eines optischen Elements, welches Folgendes umfasst:
Bereitstellen eines Formeinsatzes in einer Thermoformeinrichtung, wobei der Formeinsatz mehrere Mikrostrukturen beinhaltet, die auf einer Formoberfläche des Formeinsatzes gebildet sind, wobei die Mikrostrukturen des Formeinsatzes Mikroperforationen beinhalten;
Erwärmen des Formeinsatzes auf eine erste vorbestimmte Temperatur;
Anordnen eines Elements, das aus einem Polymermaterial besteht, in der Thermoformeinrichtung und in Kontakt mit der Formoberfläche des Formeinsatzes; und
Thermoformen, über die Formoberfläche des Formeinsatzes, des Elements, wobei das thermogeformte Element Mikrostrukturen aufweist, die auf einer Oberfläche davon gebildet sind
wobei das Verfahren ferner das Anlegen eines Vakuumdrucks unter Verwendung eines Vakuumsystems, das in der Thermoformeinrichtung enthalten ist, an das Element über die Mikroperforationen umfasst.

2. Verfahren nach Anspruch 1, wobei das Thermoformen ferner das Ausüben einer mechanischen Kraft auf das Element umfasst.

3. Verfahren nach Anspruch 1, wobei die Mikrostrukturen ein Muster von Mikrovorsprüngen auf das thermogeformte Element übertragen.

4. Verfahren nach Anspruch 1, wobei die Mikrostrukturen ein Muster von Mikrohohlräumen auf das thermogeformte Element übertragen.

5. Verfahren nach Anspruch 1, wobei eine Form der Mikroperforationen kreisförmig, dreieckig, quadratisch, hexagonal oder achteckig ist.

6. Verfahren nach Anspruch 1, wobei ein Durchmesser der Mikroperforationen zwischen 0,5 Mikrometer und 2000 Mikrometer beträgt.

7. Verfahren nach Anspruch 2, wobei das Ausüben der mechanischen Kraft ferner hydrogestütztes Ausüben einer Kraft auf das Element umfasst.

8. Verfahren nach Anspruch 2, wobei das Ausüben der mechanischen Kraft ferner stempelgestütztes Ausüben einer Kraft auf das Element umfasst.

9. Verfahren nach Anspruch 1, wobei das Thermoformen des Elements ferner Halten des Elements gegen die Formoberfläche für eine vorbestimmte Zeitdauer basierend auf einer rheologischen Relaxation eines Materials umfasst.

10. Verfahren nach Anspruch 1, wobei das Thermoformen des Elements ferner direktes/indirektes Erwärmen des Elements über die Formoberfläche auf eine zweite vorbestimmte Temperatur umfasst.

11. Verfahren nach Anspruch 1, wobei das Element eine Folie oder eine Linse ist.

12. Thermoformeinrichtung, die Folgendes umfasst:
einen Formeinsatz, der mehrere Mikrostrukturen beinhaltet, die auf einer Formoberfläche davon gebildet sind, wobei die Mikrostrukturen des Formeinsatzes Mikroperforationen beinhalten;
ein Heizelement, das den Formeinsatz auf eine erste vorbestimmte Temperatur erwärmt; und
ein Vakuumsystem, das das Thermoformen eines Elements unterstützt, um Mikrostrukturen auf einer Oberfläche desselben zu bilden, indem eine Vakuumsaugwirkung über die Mikroperforationen auf ein Element angewandt wird,
das sich in Kontakt mit der Formoberfläche des Formeinsatzes befindet.

13. Thermoformeinrichtung nach Anspruch 12, wobei die Einrichtung ein Drucksystem, das das Thermoformen eines Elements unterstützt, um Mikrostrukturen auf einer Oberfläche davon zu bilden, indem es ein Druck anwendet, und/oder ein mechanisches Kraftsystem, um Mikrostrukturen auf einer Oberfläche davon zu bilden, indem es eine mechanische Kraft auf ein Element ausübt, das sich in Kontakt mit der Formoberfläche des Formeinsatzes befindet, umfasst.

## Revendications

1. Procédé de formage d'un élément optique, comprenant :
l'introduction d'une empreinte rapportée de formage dans un appareil de thermoformage, l'empreinte rapportée de formage comportant une pluralité de microstructures formées sur une surface de formage de l'empreinte rapportée de formage, lesdites microstructures de l'empreinte rapportée de formage comportant des microperforations ;
le chauffage de l'empreinte rapportée de formage jusqu'à une première température prédéterminée ;
la mise en place d'un élément composé d'un matériau polymère dans l'appareil de thermoformage et en contact avec la surface de formage de l'empreinte rapportée de formage ; et
le thermoformage de l'élément par le biais de la surface de formage de l'empreinte rapportée de formage, l'élément thermoformé ayant des microstructures formées sur une surface de celui-ci,
le procédé comprenant en outre l'application, au moyen d'un système de vide inclus dans l'appareil de thermoformage, d'une dépression à l'élément par le biais des microperforations.

2. Procédé de la revendication 1, dans lequel le thermoformage comprend en outre l'application d'une force mécanique à l'élément.

3. Procédé de la revendication 1, dans lequel les microstructures transfèrent un motif de microsaillies à l'élément thermoformé.

4. Procédé de la revendication 1, dans lequel les microstructures transfèrent un motif de microcavités à l'élément thermoformé.

5. Procédé de la revendication 1, dans lequel une forme des microperforations est circulaire, triangulaire, carrée, hexagonale ou octogonale.

6. Procédé de la revendication 1, dans lequel un diamètre des microperforations se situe entre 0,5 micromètre et 2000 micromètres.

7. Procédé de la revendication 2, dans lequel l'application de la force mécanique comprend en outre l'application d'une force à l'élément par le biais d'une assistance hydraulique.

8. Procédé de la revendication 2, dans lequel l'application de la force mécanique comprend en outre l'application d'une force à l'élément avec l'assistance d'un poinçon.

9. Procédé de la revendication 1, dans lequel le thermoformage de l'élément comprend en outre le maintien de l'élément contre la surface de formage pendant une durée prédéterminée basée sur une relaxation rhéologique du matériau.

10. Procédé de la revendication 1, dans lequel le thermoformage de l'élément comprend en outre le chauffage direct/indirect de l'élément par le biais de la surface de formage jusqu'à une deuxième température prédéterminée.

11. Procédé de la revendication 1, dans lequel l'élément est un film ou une lentille.

12. Appareil de thermoformage, comprenant :
une empreinte rapportée de formage comportant une pluralité de microstructures formées sur une surface de formage de celle-ci, les microstructures de l'empreinte rapportée de formage comportant des microperforations ;
un élément chauffant qui chauffe l'empreinte rapportée de formage jusqu'à une première température prédéterminée ; et
un système de vide qui favorise le thermoformage d'un élément pour former des microstructures sur une surface de celui-ci en appliquant une aspiration sous vide par le biais des microperforations à un élément en contact avec la surface de formage de l'empreinte rapportée de formage.

13. Appareil de thermoformage de la revendication 12, l'appareil comprenant un système de pression qui favorise le thermoformage d'un élément pour former des microstructures sur une surface de celui-ci en appliquant une pression, et/ou un système de force mécanique pour former des microstructures sur une surface de celui-ci en appliquant une force mécanique à un élément en contact avec la surface de formage de l'empreinte rapportée de formage.
